# EUROPÄISCHE PATENTSCHRIFT

(11) **EP 2 515 424 B1**
(45) Veröffentlichungstag und Bekanntmachung des Hinweises auf die Patenterteilung: **29.08.2018**
(21) Anmeldenummer: 12002572.1
(22) Anmeldetag: 12.04.2012
(51) Int. Cl.: H02M 3/158, H02M 7/49, H02M 1/00, H02J 3/38, H02J 7/00

(54) **Gleichspannungswandler**
Direct current converter
Convertisseur de tension continue

(30) Priorität: 20.04.2011 DE 102011018355
(43) Veröffentlichungstag der Anmeldung: 24.10.2012
(73) Patentinhaber: SEW-EURODRIVE GmbH & Co. KG, 76646 Bruchsal (DE)
(72) Erfinder: Schill, Christoph, 88213 Ravensburg (DE)
(74) Vertreter: Tüngler, Eberhard

(56) Entgegenhaltungen:
- EP-A1- 0 383 971

## Beschreibung

Die vorliegende Erfindung betrifft einen Gleichspannungswandler, eine Schaltungsanordnung mit einem solchen Gleichspannungswandler sowie eine Wechselrichterschaltung mit einem solchen Gleichspannungswandler bzw. einer solchen Schaltungsanordnung.

Gleichspannungswandler (DC/DC-Wandler) werden häufig in Stromversorgungen verschiedenster Art verwendet. Solche Stromversorgungen können wenigstens einen Wechselrichter zum Betrieb eines Inselnetzes mit Wechselspannung oder zur Einspeisung von Wechselstrom in ein Netz enthalten.

Wechselrichter können mit einem sehr guten Wirkungsgrad arbeiten, wenn ihre Eingangsspannung auf die zu erzeugende Wechselspannung angepasst ist. Insbesondere sollte die Eingangsspannung des Wechselrichters dabei zumindest näherungsweise konstant sein. Zur Anpassung von stark variablen Eingangsspannungen, wie sie zum Beispiel in Zusammenhang mit Solargeneratoren häufig auftreten, wird deshalb oft ein Gleichspannungswandler eingesetzt. Der Gleichspannungswandler setzt dabei die variable Gleichspannung in eine relativ konstante Zwischenkreisspannung für den Wechselrichter um.

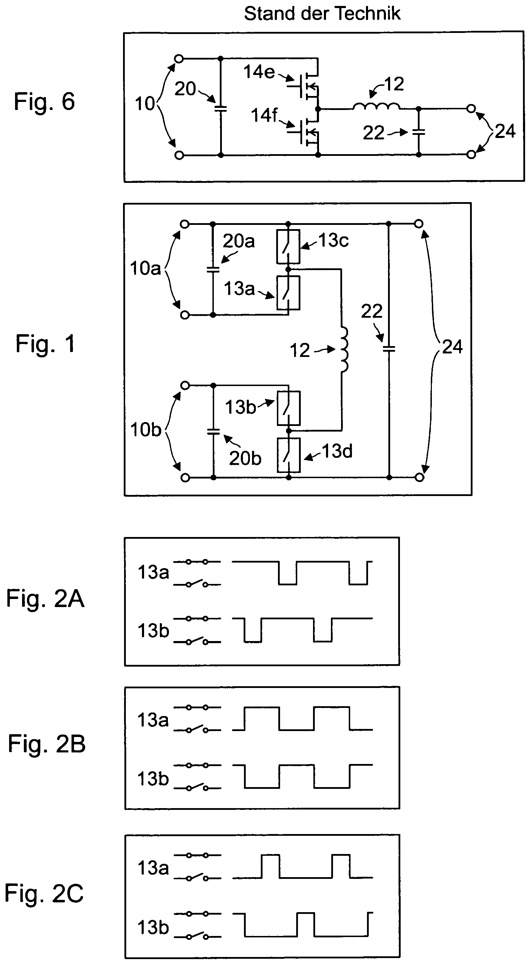

Fig. 6 zeigt einen bidirektionalen DC/DC-Wandler nach dem Stand der Technik. Dieser herkömmliche DC/DC-Wandler besteht im Wesentlichen aus zwei Schaltelementen 14e und 14f, welche in Form einer Halbbrücke parallel zu einem Anschluss 10 geschaltet sind, und einer Drossel 12, die mit dem Mittelpunkt der Halbbrücke und dem Pluspol eines Anschlusses 24 verbunden ist. Die Kapazitäten bzw. Kondensatoren 20 und 22 parallel zu den beiden Anschlüssen 10 und 24 dienen zur Pufferung von Rippleströmen.

An den Anschlüssen 10, 24 liegen jeweils Gleichspannungen an. Der bidirektionale DC/DC-Wandler überträgt Energie zwischen diesen Anschlüssen. Dabei werden die Schaltelemente 14e, 14f abwechselnd in schneller Folge ein- und ausgeschaltet (getaktet). So entsteht am Mittelpunkt der Halbbrücke eine rechteckförmige Spannung, deren Mittelwert vom Tastverhältnis der Schaltelemente 14e, 14f abhängt. Die Drossel 12 integriert diese Spannung und führt sie dem Anschluss 24 zu, wobei sie periodisch Energie aufnimmt und abgibt.

Erfolgt der Energiefluss vom Anschluss 10 zum Anschluss 24, so arbeitet die Schaltung als Tiefsetzsteller. Wenn das erste Schaltelement 14e eingeschaltet ist, fließt Strom vom Anschluss 10 durch dieses erste Schaltelement 14e und die Drossel 12 zum Anschluss 24, wobei in der Drossel 12 Energie zwischengespeichert wird. Wenn das zweite Schaltelement 14f eingeschaltet ist, fließt der Drosselstrom über dieses zweite Schaltelement 14f weiter, wobei die Drossel 12 die zuvor zwischengespeicherte Energie an den Anschluss 24 abgibt.

Erfolgt der Energiefluss hingegen vom Anschluss 24 zum Anschluss 10, so arbeitet die Schaltung als Hochsetzsteller. Wenn das zweite Schaltelement 14f eingeschaltet ist, fließt Strom vom Anschluss 24 durch die Drossel 12 und das zweite Schaltelement 14f, wobei in der Drossel 12 Energie zwischengespeichert wird. Wenn dagegen das erste Schaltelement 14e eingeschaltet ist, fließt der Drosselstrom über dieses erste Schaltelement 14e weiter zum Anschluss 10, wobei die Drossel 12 die zuvor zwischengespeicherte Energie an den Anschluss 10 abgibt.

Das Tastverhältnis der beiden Schaltelemente 14e, 14f wird über eine Steuereinheit so gewählt, dass sich die gewünschte Spannung bzw. der gewünschte Strom am Anschluss 10 und/oder am Anschluss 24 einstellt.

Bei diesem Gleichspannungswandler wird der Wirkungsgrad allerdings mit größer werdenden Übersetzungsverhältnissen zwischen den Spannungen an den Anschlüssen 10 und 24 schlechter. Außerdem wird eine große Drossel 12 benötigt, um die großen Energiemengen zwischenspeichern zu können.

Die EP 0 383 971 A1 beschreibt eine Einspeiseschaltung für eine Mehrstromlokomotive. Die Einspeiseschaltung enthält zwei Wechselrichter zur Speisung je eines Motors, die jeweils aus einem herkömmlichen Gleichstromwandler mit einer getaktet betriebenen Halbbrücke und einer Induktivität gespeist werden. Die beiden Gleichstromwandler werden über zwei weitere, nicht getaktete Halbbrücken wahlweise seriell oder parallel konfiguriert, um eine Anpassung an die am Eingang anliegende speisende Gleichspannung zu erreichen.

Der Erfindung liegt die Aufgabe zugrunde, einen verbesserten Gleichspannungswandler zu schaffen, welcher möglichst geringe Verluste aufweist.

Diese Aufgabe wird gelöst durch einen Gleichspannungswandler mit den Merkmalen des Anspruchs 1. Vorteilhafte Ausgestaltungen und Weiterbildungen der Erfindung sind Gegenstand der abhängigen Ansprüche.

Der erfindungsgemäße Gleichspannungswandler zum Hoch- und/oder Tiefsetzen von Spannungen weist wenigstens einen ersten Anschluss, wenigstens einen zweiten Anschluss und wenigstens einen dritten Anschluss auf, wobei ein Energiefluss zwischen den ersten und zweiten Anschlüssen einerseits und dem dritten Anschluss andererseits möglich ist.

Der Gleichspannungswandler der Erfindung enthält eine getaktet betreibbare erste Halbbrücke, welche parallel zu dem ersten Anschluss geschaltet ist und eine Reihenschaltung von wenigstens einer ersten Schaltvorrichtung und einer zweiten Schaltvorrichtung aufweist, und eine getaktet betreibbare zweite Halbbrücke, welche parallel zu dem zweiten Anschluss geschaltet ist und eine Reihenschaltung von wenigstens einer dritten Schaltvorrichtung und wenigstens einer vierten Schaltvorrichtung aufweist. Schließlich weist der Gleichspannungswandler der Erfindung auch wenigstens eine Drossel auf, welche die Mittelpunkte der beiden getaktet betreibbaren Halbbrücken miteinander verbindet und welche als fliegende Induktivität betrieben wird.

Diese Schaltungstopologie hat geringere Verluste als ein herkömmlicher Gleichspannungswandler, wie er zum Beispiel in Fig. 6 veranschaulicht ist. Außerdem benötigt die erfindungsgemäße Schaltungstopologie im Gegensatz zu einem herkömmlichen Gleichspannungswandler, wie er zum Beispiel in Fig. 6 veranschaulicht ist, nur eine kleinere Drossel, d.h. eine Drossel mit einem kleineren Bauvolumen.

Gemäß der Erfindung sind parallel zum ersten und zum zweiten Anschluss Halbbrücken von Reihenschaltungen von Schaltvorrichtungen geschaltet, deren Mittelpunkte über eine Drossel miteinander verbunden sind. Die Funktion des Gleichspannungswandlers ist deshalb wie folgt.

Die ersten und zweiten Anschlüsse werden vorzugsweise symmetrisch, also mit ungefähr gleichem Strom und gleicher Spannung betrieben. Damit ergibt sich ein Energietransfer zwischen diesen beiden Anschlüssen einerseits und dem dritten Anschluss andererseits.

Die erste und die zweite Schaltvorrichtung der ersten Halbbrücke leiten dabei abwechselnd, wobei eine Totzeit zwischen beiden Zeitabschnitten vorhanden sein kann. Dies gilt für die dritte und die vierte Schaltvorrichtung der zweiten Halbbrücke analog. Abhängig von der Spannungsübersetzung des Gleichspannungswandlers sind vier verschiedene Fälle zu unterscheiden.

Im ersten Fall beträgt die Spannung an den ersten und zweiten Anschlüssen etwa 50% der Spannung am dritten Anschluss und werden die zweite und die dritte Schaltvorrichtung statisch geschlossen. Die ersten und zweiten Anschlüsse sind dann über die Drossel in Serie mit dem dritten Anschluss verbunden, wodurch sich eine Spannungsverdopplung ergibt. Die Spannung an der Drossel ist näherungsweise Null. Es entstehen keine Schaltverluste in den Schaltvorrichtungen und keine Ummagnetisierungsverluste in der Drossel. In der Drossel wird keine Energie periodisch zwischengespeichert und es besteht ein konstanter Energiefluss zwischen den ersten und zweiten Anschlüssen einerseits und dem dritten Anschluss andererseits.

Im zweiten Fall beträgt die Spannung an den ersten und zweiten Anschlüssen etwa 100% der Spannung am dritten Anschluss und werden die ersten und zweiten Anschlüsse vorzugsweise abwechselnd über die Drossel parallel mit dem dritten Anschluss verbunden. Dazu werden die erste und die dritte Schaltvorrichtung im Wechsel mit der zweiten und der vierten Schaltvorrichtung eingeschaltet. Die Spannung an der Drossel bleibt dabei näherungsweise Null, somit entstehen keine Ummagnetisierungsverluste und es wird keine Energie in der Drossel periodisch zwischengespeichert. Es besteht ein konstanter Energiefluss zwischen den ersten und zweiten Anschlüssen einerseits und dem dritten Anschluss andererseits.

Selbstverständlich ist es auch möglich, die Schaltvorrichtung in anderer Weise zu takten. Zum Beispiel können die zweite und die dritte Schaltvorrichtung im Wechsel mit der ersten und der vierten Schaltvorrichtung eingeschaltet werden. Die Spannungsübersetzung des Wandlers ist dann unverändert. Jedoch wird bei dieser Taktungsart der Energiefluss zwischen den ersten und zweiten Anschlüssen und dem dritten Anschluss periodisch unterbrochen. Die Drossel wird mit großen Spannungen beaufschlagt, d.h. es werden große Energiemengen periodisch in der Drossel zwischengespeichert. Somit ist eine größere Drossel nötig und es treten höhere Rippleströme und Ummagnetisierungsverluste auf.

Im dritten Fall liegt die Spannung an den ersten und zweiten Anschlüssen im Bereich von 50% bis 100% der Spannung am dritten Anschluss. Es wird in schneller Folge zwischen einer Serienschaltung der ersten und zweiten Anschlüsse, einer Parallelschaltung des ersten Anschlusses mit dem dritten Anschluss und einer Parallelschaltung des zweiten Anschlusses mit dem dritten Anschluss abgewechselt. In jedem dieser drei Schaltzustände fließt Energie zwischen den ersten und zweiten Anschlüssen einerseits und dem dritten Anschluss andererseits. Über das Tastverhältnis der Schaltvorrichtungen kann das Verhältnis zwischen den Spannungen an den Anschlüssen geregelt werden.

Es ist auch ein Schaltzustand denkbar, bei dem die erste und die vierte Schaltvorrichtung eingeschaltet sind. In diesem Fall fließt Energie zwischen der Drossel und dem dritten Anschluss, während die ersten und zweiten Anschlüsse weder Energie aufnehmen noch abgeben können. Dieser Schaltzustand sollte vermieden werden, da der direkte Energiefluss zwischen den Anschlüssen unterbrochen ist und stattdessen eine große Spannung an der Drossel auftritt und somit große Energiemengen in der Drossel periodisch zwischengespeichert werden.

In einem vierten Fall beträgt die Spannung an den ersten und zweiten Anschlüssen mehr als 100% der Spannung am dritten Anschluss. So wird in schneller Folge vorzugsweise zwischen einer Parallelschaltung des ersten Anschlusses mit dem dritten Anschluss, einer Parallelschaltung des zweiten Anschlusses mit dem dritten Anschluss und einer Parallelschaltung der Drossel mit dem dritten Anschluss gewechselt. Über das Tastverhältnis der Schaltvorrichtungen kann das Verhältnis zwischen den Spannungen an den Anschlüssen geregelt werden.

Der Schaltzustand, in dem die ersten und zweiten Anschlüsse in Serie miteinander verbunden sind, sollte dabei vermieden werden, weil in diesem Fall die höchste Spannung an der Drossel auftritt.

Insgesamt betrachtet wird in allen beschriebenen vier Fällen die Taktung so gewählt, dass die in der Drossel periodisch zwischengespeicherte Energie minimiert wird. Dies wird dadurch erreicht, dass bevorzugt diejenigen Schaltzustände gewählt werden, bei welchen die Spannung an der Drossel klein ist.

Wie beschrieben, kann die Spannungsübersetzung zwischen den ersten und zweiten Anschlüssen und dem dritten Anschluss sowohl 1:1 als auch 1:2 sein, ohne dass in der Drossel periodisch Energie zwischengespeichert werden muss. Bei einem herkömmlichen Wandler nach Fig. 6 ist dies nur bei einer Spannungsübersetzung von 1:1 möglich. Bei einer Übersetzung von 1:2 müssten große Energiemengen in der Drossel periodisch zwischengespeichert werden, wozu eine entsprechend große Drossel nötig wäre.

Wenn sich am dritten Anschluss des Gleichspannungswandlers ein Wechselrichter befindet, welcher in der Regel eine näherungsweise konstante Spannung benötigt und eine definierte Maximalleistung aufweist, so ist auch der maximale Strom über den dritten Anschluss konstant. Da dieser Strom auch über die Drossel fließt, ist auch deren Maximalstrom, abgesehen vom überlagerten Stromripple, konstant. Das bedeutet, dass unabhängig von der Spannung an den ersten und zweiten Anschlüssen des DC/DC-Wandlers der Maximalstrom in der Drossel immer ungefähr gleich ist. Dadurch ist es nicht nötig, die Drossel für bestimmte Betriebsfälle zu überdimensionieren, wie es z.B. der Fall wäre, wenn der Wandler nach Fig. 6 als Hochsetzsteller zur Speisung eines Wechselrichters verwendet würde. In diesem Fall wäre der Drosselstrom bei einem Übersetzungsverhältnis von 1:2 doppelt so groß wie bei einem Übersetzungsverhältnis von 1:1.

Somit ergibt sich in vorteilhafter Weise, dass der erfindungsgemäße DC/DC-Wandler bei Anwendung des beschriebenen Verfahrens eine kleinere Drossel benötigt und einen höheren Wirkungsgrad aufweist als ein Wandler nach dem Stand der Technik gemäß Fig. 6.

Die genannten ersten, zweiten, dritten und/oder vierten Schaltvorrichtungen weisen bevorzugt (jeweils) wenigstens ein Schaltelement und/oder wenigstens ein Gleichrichtelement auf.

Die ersten Anschlüsse des Gleichspannungswandlers können wahlweise symmetrisch oder asymmetrisch betrieben werden.

In einer vorteilhaften Ausgestaltung der Erfindung weisen die ersten, zweiten, dritten und/ oder vierten Schaltvorrichtungen (jeweils) wenigstens ein Halbleiterelement auf, welches getaktet betreibbar ist.

In diesem Fall kann eine Steuereinrichtung vorhanden sein, welche den Strom und/oder die Spannung an einer oder mehreren Stellen im Gleichspannungswandler steuert oder regelt, indem sie mindestens eine der Schaltvorrichtungen getaktet ansteuert.

In einer vorteilhaften Ausgestaltung der Erfindung ist eine Einrichtung zum stromlosen und/ oder spannungslosen Schalten der ersten, der zweiten, der dritten und/oder der vierten Schaltvorrichtung vorgesehen.

In einer weiteren vorteilhaften Ausgestaltung der Erfindung ist eine Einrichtung zum Takten der ersten, der zweiten, der dritten und/oder der vierten Schaltvorrichtung derart, dass Schaltzustände gewählt werden, bei welchen die Spannung an der Drossel klein ist, vorgesehen.

In einer noch weiteren vorteilhaften Ausgestaltung der Erfindung ist eine Einrichtung zum Absenken einer Taktfrequenz der ersten, der zweiten, der dritten und/oder der vierten Schaltvorrichtung in Abhängigkeit von einem Spannungsübersetzungsverhältnis des Gleichspannungswandlers vorgesehen.

Die ersten, zweiten, dritten und vierten Schaltvorrichtungen des Gleichspannungswandlers können wahlweise mit fester oder mit variabler Frequenz getaktet werden.

In einer vorteilhaften Ausgestaltung der Erfindung ist ein Pol (z.B. Pluspol) des ersten Anschlusses mit einem Pol (z.B. Pluspol) des dritten Anschlusses verbunden und ist ein Pol (z.B. Minuspol) des zweiten Anschlusses mit einem anderen Pol (z.B. Minuspol) des dritten Anschlusses verbunden. Mit dieser Konfiguration können in vorteilhafter Weise Funkstörungen reduziert werden.

In einer weiteren vorteilhaften Ausgestaltung der Erfindung ist parallel zum ersten, zweiten und/oder dritten Anschluss (jeweils) wenigstens ein Pufferkondensator geschaltet. Mit diesen Pufferkondensatoren können zum Beispiel Rippleströme gepuffert werden.

Wenn alle Schaltvorrichtungen des Gleichspannungswandlers mit Schaltelementen ausgeführt sind, ist ein bidirektionaler Energiefluss zwischen den ersten und zweiten Anschlüssen und dem dritten Anschluss möglich. Wenn die Schaltvorrichtungen hingegen teilweise als passive Gleichrichtelemente ausgeführt sind, kann der Energiefluss auf eine bestimmte Richtung eingeschränkt werden.

In einer vorteilhaften Ausgestaltung der Erfindung ist ferner eine Einrichtung vorgesehen, um die ersten und zweiten Anschlüsse statisch in Serie oder statisch parallel zu schalten.

Es können auch zwei oder mehr Gleichspannungswandler der Erfindung parallel oder in Serie geschaltet werden.

Die zwei oder mehr parallel geschalteten Gleichspannungswandler werden dann vorzugsweise im Multiphasebetrieb betrieben.

In einer vorteilhaften Ausgestaltung der Erfindung können die parallel geschalteten Gleichspannungswandler der Erfindung zur Erhöhung des Wirkungsgrades bei Teillast auch teilweise abgeschaltet werden.

Der oben beschriebene Gleichspannungswandler der Erfindung bzw. die oben beschriebenen Schaltungsanordnungen mit einem solchen Gleichspannungswandler eignen sich in vorteilhafter Weise zum Einsatz in Wechselrichterschaltungen, insbesondere in Solarwechselrichterschaltungen, mit wenigstens einem Wechselrichter.

In einer vorteilhaften Ausgestaltung der Erfindung wird die Eingangsspannung des mindestens einen Wechselrichters mittels des erfindungsgemäßen Gleichspannungswandlers dynamisch so geregelt, dass der Wechselrichter in seinem optimalen Betriebszustand arbeitet.

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich. Darin zeigen:
- Fig. 1: ein schematisches Blockschaltbild des Aufbaus einer ersten Ausführungsform des erfindungsgemäßen DC/DC-Wandlers;
- Fig. 2A bis 2C: eine Veranschaulichung von Schaltzuständen der Schaltvorrichtungen des Gleichspannungswandlers von Fig. 1;
- Fig. 3: ein schematisches Blockschaltbild des Aufbaus einer zweiten Ausführungsform des erfindungsgemäßen DC/DC-Wandlers;
- Fig. 4: ein schematisches Blockschaltbild des Aufbaus einer dritten Ausführungsform des erfindungsgemäßen DC/DC-Wandlers;
- Fig. 5: ein schematisches Blockschaltbild des Aufbaus einer Ausführungsform einer Wechselrichterschaltung mit einem erfindungsgemäßem DC/DC-Wandler; und
- Fig.6: ein schematisches Blockschaltbild des Aufbaus eines bidirektionalen DC/DC-Wandlers nach dem Stand der Technik.

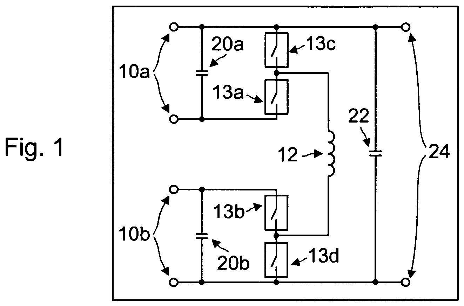

Anhand von Fig. 1 und 2 werden zunächst Aufbau und Funktionsweise einer Grundform des erfindungsgemäßen Gleichspannungswandlers als eine erste bevorzugte Ausführungsform näher erläutert.

Der Gleichspannungswandler (DC/DC-Wandler) weist einen ersten Anschluss 10a, einen zweiten Anschluss 10b und einen dritten Anschluss 24 auf.

Parallel zu den ersten und zweiten Anschlüssen 10a, 10b ist jeweils eine Halbbrücke geschaltet. Die Halbbrücken bestehen jeweils aus einer Reihenschaltung von zwei Schaltvorrichtungen (13a, 13c und 13b, 13d). Jede der Schaltvorrichtungen 13a - 13d enthält mindestens ein Schaltelement und/oder mindestens ein Gleichrichtelement.

Die Mittelpunkte dieser beiden Halbbrücken sind über eine Drossel 12 miteinander verbunden, welche als fliegende Induktivität betrieben wird.

Der Pluspol des ersten Anschlusses 10a ist mit dem Pluspol des dritten Anschlusses 24 verbunden und der Minuspol des zweiten Anschlusses 10b ist mit dem Minuspol des dritten Anschlusses 24 verbunden. Parallel zu den Anschlüssen 10a, 10b, 24 sind Pufferkondensatoren 20a, 20b, 22 zur Pufferung von Rippleströmen geschaltet.

Die Schaltvorrichtungen 13a - 13d können getaktet betreibbare Schaltelemente wie MOSFETs oder IGBTs oder in bestimmten Fällen auch Gleichrichtelemente wie Dioden enthalten, wie später noch erläutert wird. Im Fall von Schaltelementen können intern oder extern Freilaufdioden antiparallel geschaltet sein. Diese schützen die Schaltelemente vor Rückwärtsspannungen bzw. ermöglichen einen Freilauf. Zur Verringerung der Schaltverluste können zusätzlich Mittel vorgesehen sein, welche das Schalten der Schaltvorrichtungen 13a - 13d im Strom- oder / und Spannungsnulldurchgang ermöglichen.

Zusätzlich können Mittel vorhanden sein, um die ersten und zweiten Anschlüsse 10a, 10b statisch in Serie oder parallel zum dritten Anschluss 24 zu schalten, um die Verluste in den Schaltvorrichtungen 13a - 13d zu senken. Dies können z.B. Relais sein.

Es kann ferner eine Steuereinrichtung bzw. -einheit vorhanden sein, welche den Strom und/oder die Spannung an einer oder mehreren Stellen im DC/DC-Wandler steuert oder regelt, indem sie mindestens zwei der Schaltvorrichtungen 13a - 13d getaktet ansteuert. Diese Steuereinrichtung (nicht dargestellt) kann so ausgestaltet sein, dass sie bei Bedarf eine statische Serien- oder Parallelschaltung der Anschlüsse 10a, 10b bewirkt.

Die ersten und zweiten Anschlüsse 10a, 10b werden vorzugsweise symmetrisch, also mit ungefähr gleichem Strom und gleicher Spannung betrieben. Damit ergibt sich ein Energiefluss zwischen den ersten und zweiten Anschlüssen 10a, 10b einerseits und dem dritten Anschluss 24 andererseits. Der Energiefluss kann in beide Richtungen erfolgen. Je nach Betriebsrichtung liegt entweder jeweils an den Anschlüssen 10a, 10b oder am Anschluss 24 eine speisende Quelle. Als Quelle sind verschiedenste Gleichstromquellen denkbar, wie z.B. Solargeneratoren, Brennstoffzellen, thermoelektrische Generatoren, Akkus, Batterien, Superkondensatoren, elektromagnetische Generatoren, AC/DC-Wandler, DC/DC-Wandler oder dergleichen.

An der der speisenden Seite gegenüberliegenden Seite können Verbraucher angeschlossen werden. Als Verbraucher sind auch Baugruppen denkbar, welche die Energie weiterleiten, z.B. Wechselrichter oder Batterieladegeräte.

Es ist auch denkbar, dass der DC/DC-Wandler seine Energieflussrichtung im Betrieb wechselt. Ein Einsatzbeispiel wäre z.B. ein bidirektionaler Energietransfer zwischen Akkus oder zwischen Kondensatoren, um die gespeicherten Ladungen zu balancieren.

Die erste und die zweite Schaltvorrichtung 13a, 13c der ersten Halbbrücke parallel zum ersten Anschluss 10a leiten abwechselnd, wobei eine Totzeit zwischen beiden Zeitabschnitten vorhanden sein kann. Dies gilt analog auch für die dritte und die vierte Schaltvorrichtung 13b, 13d der zweiten Halbbrücke parallel zum zweiten Anschluss 10b. Ein gleichzeitiges Leiten beider Schaltvorrichtungen einer Halbbrücke muss vermieden werden.

In Fig. 2A bis 2C sind zur Vereinfachung jeweils nur die Schaltzustände für die erste und die dritte Schaltvorrichtung 13a, 13b dargestellt. Die zweite und die vierte Schaltvorrichtung 13c, 13d haben jeweils den entgegengesetzten Schaltzustand oder sind nichtleitend.

Abhängig von der Spannungsübersetzung sind die bereits in der Beschreibungseinleitung beschriebenen vier Fälle zu unterscheiden.

### Fall 1

Beträgt die Spannung an den ersten und zweiten Anschlüssen 10a, 10b etwa 50% der Spannung am dritten Anschluss 24, so werden die Schaltvorrichtungen 13a, 13b statisch geschlossen. Die ersten und zweiten Anschlüsse 10a, 10b sind dann über die Drossel 12 in Serie mit dem dritten Anschluss 24 verbunden.

### Fall 2

Beträgt die Spannung an den ersten und zweiten Anschlüssen 10a, 10b etwa 100% der Spannung am dritten Anschluss 24, so werden die ersten und zweiten Anschlüsse 10a, 10b abwechselnd über die Drossel 12 parallel mit dem dritten Anschluss 24 verbunden. Dazu werden die Schaltvorrichtungen 13b, 13c im Wechsel mit den Schaltvorrichtungen 13a, 13d eingeschaltet, wie in Fig. 2B dargestellt.

### Fall 3

Liegt die Spannung an den ersten und zweiten Anschlüssen 10a, 10b im Bereich von 50% bis 100% der Spannung am dritten Anschluss 24, so wird in schneller Folge zwischen einer Serienschaltung der ersten und zweiten Anschlüsse 10a, 10b, einer Parallelschaltung des ersten Anschlusses 10a mit dem dritten Anschluss 24 und einer Parallelschaltung des zweiten Anschlusses 10b mit dem dritten Anschluss 24 abgewechselt, wie in Fig. 2A dargestellt.

### Fall 4

Beträgt die Spannung an den ersten und zweiten Anschlüssen 10a, 10b mehr als 100% der Spannung am dritten Anschluss 24, so wird in schneller Folge zwischen einer Parallelschaltung des ersten Anschlusses 10a mit dem dritten Anschluss 24, einer Parallelschaltung des zweiten Anschlusses 10b mit dem dritten Anschluss 24 und einer Parallelschaltung der Drossel 12 mit dem dritten Anschluss 24 abgewechselt, wie in Fig. 2C dargestellt. Je höher die relative Einschaltdauer der Schaltvorrichtungen 13c und 13d ist, desto größer werden die Spannungen an den ersten und zweiten Anschlüssen 10a, 10b.

Es ist auch ein unsymmetrischer Betrieb möglich. Beispielsweise kann, wenn am ersten Anschluss 10a weniger Strom fließen soll als am zweiten Anschluss 10b, das Tastverhältnis der ersten Schaltvorrichtung 13a reduziert werden. Der Strom in der Drossel 12 wird dann vermehrt vom positiven Pol des dritten Anschlusses 24 statt vom negativen Pol des ersten Anschlusses 10a gespeist.

Die Taktung der Schaltvorrichtungen 13a - 13d der Halbbrücken kann mit fester oder variabler Frequenz erfolgen.

Ist die Spannung an den ersten und zweiten Anschlüssen 10a, 10b im Bereich von 50% oder 100% der Spannung am dritten Anschluss 24, so kann z.B. die Frequenz abgesenkt werden, um die Schaltverluste zu verringern.

Im Folgenden werden verschiedene weitere Ausführungsformen des DC/DC-Wandlers der Erfindung beschrieben, wobei aber im Wesentlichen nur noch deren besondere Eigenschaften beschrieben werden. Trotzdem sind natürlich auch bei diesen weiteren Ausführungsformen - wie für den Fachmann leicht erkennbar - die oben in Zusammenhang mit Fig. 2 erläuterten Detaillösungen umsetzbar.

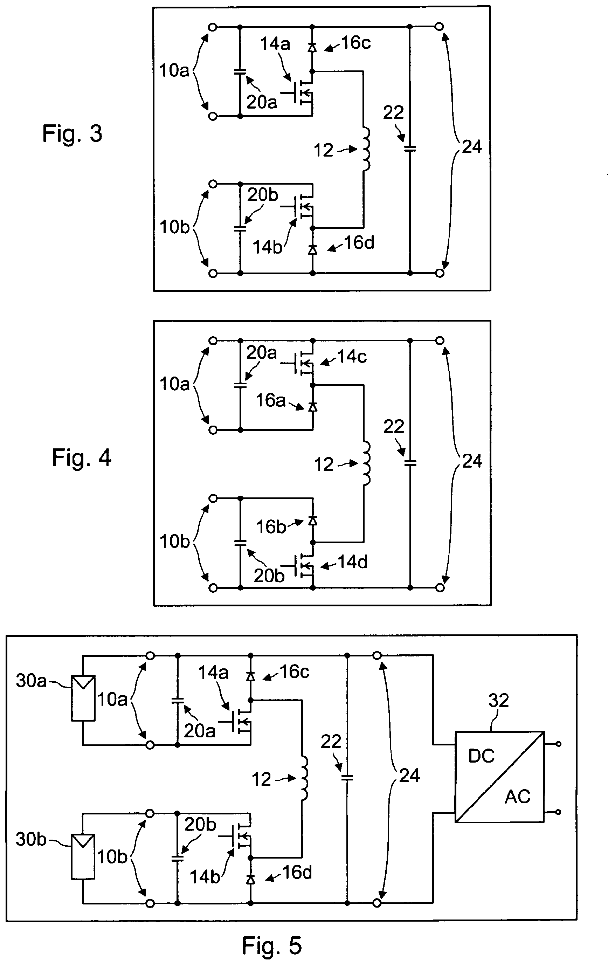

Fig. 3 zeigt eine zweite bevorzugte Ausführungsform des erfindungsgemäßen DC/DC-Wandlers. Wenn beabsichtigt ist, Energie nur von den ersten und zweiten Anschlüssen 10a, 10b zum dritten Anschluss 24 zu übertragen, so können die Schaltvorrichtungen 13c, 13d durch Gleichrichtelemente 16c, 16d gebildet werden. Die anderen Schaltvorrichtungen 13a, 13b müssen hingegen aktiv getaktet werden können, d.h. es müssen Schaltelemente verwendet werden (14a, 14b). Anstelle oder zusätzlich zu den Gleichrichtelementen 16c, 16d können auch Schaltelemente als Synchrongleichrichter verwendet werden, um den Wirkungsgrad zu steigern.

Fig. 4 zeigt eine dritte bevorzugte Ausführungsform des erfindungsgemäßen DC/DC-Wandlers. Wenn beabsichtigt ist, Energie nur vom dritten Anschluss 24 zum ersten Anschluss 10a und zweiten Anschluss 10b zu übertragen, so können die Schaltvorrichtungen 13a, 13b durch Gleichrichtelemente 16a, 16b gebildet werden. Die anderen beiden Schaltvorrichtungen 13c, 13d müssen dagegen aktiv taktbar sein, d.h. es müssen zum Beispiel Schaltelemente verwendet werden (14c, 14d).

Es können auch zwei oder mehr erfindungsgemäße DC/DC-Wandler an jeweils allen drei Anschlüssen parallelgeschaltet werden, wodurch sich mehrere Vorteile ergeben können.

Im Teillastbetrieb können einzelne Wandler abgeschaltet werden, wodurch der Wirkungsgrad gesteigert werden kann. Außerdem können die Wandler phasenversetzt betrieben werden, um die Rippleströme zu verringern. Dieser so genannte Multiphasebetrieb bietet noch einen Vorteil.

Ist die Spannungsübersetzung zwischen den ersten und zweiten Anschlüssen 10a, 10b und dem dritten Anschluss 24 etwa 1:1, so kann auf eine Taktung der Halbbrücken vollständig verzichtet werden, wodurch die Schaltverluste entfallen. Dabei ist dann jeder der Anschlüsse 10a, 10b über jeweils mindestens eine Drossel eines Teilwandlers mit dem dritten Anschluss 24 statisch parallel verbunden. Ohne die Parallelschaltung müssen die ersten und zweiten Anschlüsse 10a, 10b abwechselnd mit dem dritten Anschluss 24 verbunden werden, was eine Taktung erzwingt.

Zwei oder mehr erfindungsgemäße DC/DC-Wandler können auch jeweils nur an einem Anschluss parallelgeschaltet werden. Auch Serienschaltungen oder Kaskadierungen sowie Kombinationen dieser Schaltungstopologien sind möglich.

Der DC/DC-Wandler der Erfindung kann neben der direkten Speisung von Gleichstromverbrauchern oder Gleichstromnetzen in vorteilhafter Weise auch zur Speisung von Gleichspannungs-Zwischenkreisen in anderen Geräten wie z.B. Wechselrichtern genutzt werden.

Ein Wechselrichter benötigt zur Erzeugung einer Wechselspannung in der Regel eine Zwischenkreisspannung einer bestimmten Höhe. Ein optimaler Wirkungsgrad kann erreicht werden, wenn die Zwischenkreisspannung genau auf die zu erzeugende Wechselspannung angepasst ist.

Wechselrichter werden häufig zur solaren Stromversorgung eingesetzt. Solargeneratoren liefern abhängig von Lichteinfall, Temperatur und Anzahl der verschalteten Module eine stark schwankende Gleichspannung. Je breiter der Bereich der Eingangs-Gleichspannung ist, die ein Wechselrichter verarbeiten kann, desto mehr Möglichkeiten hat der Installateur, passende Solarmodulkombinationen zu finden. Ein Eingangsspannungs-Bereich von 1:2 bei voller Last bzw. 1:2,5 von Volllast bis Leerlauf ist wünschenswert.

Zur Anpassung eines Solargenerators an einen Wechselrichter wird daher oft ein DC/DC-Wandler verwendet. Dieser kann die variierende Gleichspannung des Solargenerators auf eine näherungsweise konstante Zwischenkreisspannung hochsetzen oder tiefsetzen. Leider treten in einem herkömmlichen DC/DC-Wandler in der Regel zusätzliche Verluste auf, die den Gesamtwirkungsgrad der Anordnung verringern.

Der erfindungsgemäße DC/DC-Wandler ist für den Einsatz in Solarwechselrichtern vorteilhaft geeignet. Gegenüber dem Stand der Technik nach Fig. 6 hat er einen höheren Wirkungsgrad. Die Potenziale an den Anschlüssen können konstant gehalten werden. Dies ist wichtig, weil das Potenzial eines Solargenerators aus Gründen der elektromagnetischen Verträglichkeit keine hochfrequenten Sprünge aufweisen sollte.

In Verbindung mit dem erfindungsgemäßen DC/DC-Wandler können verschiedene Wechselrichter-Topologien eingesetzt werden. Es können sowohl einphasige als auch mehrphasige Wechselrichter verwendet werden. Es können Wechselrichter zur Speisung von Inselnetzen oder zur Einspeisung in ein Stromnetz verwendet werden. Der DC/DC-Wandler kann dazu verwendet werden, ein Maximum-Power-Point-Tracking des Solargenerators auszuführen.

Fig. 5 zeigt beispielhaft eine Wechselrichterschaltung mit einem erfindungsgemäßem DC/DC-Wandler nach Fig. 3.

An den ersten und zweiten Anschlüssen 10a, 10b des DC/DC-Wandlers sind Solargeneratoren 30a, 30b angeschlossen. Deren variable Spannung wird mit Hilfe des DC/DC-Wandlers auf eine relativ konstante Zwischenkreisspannung umgesetzt, welche über den dritten Anschluss 24 zur Speisung eines Wechselrichters 32 dient.

Es ist auch möglich, die Zwischenkreisspannung mit einem überlagerten Wechselanteil zu modulieren, was für die optimale Anpassung des Wechselrichters 32 von Vorteil sein kann.

In einer bevorzugten Auslegung beträgt die Spannung an den ersten und zweiten Anschlüssen 10a, 10b im Normalbetrieb ca. 50% bis 100% und im Leerlauf bis 125% der Spannung am dritten Anschluss 24.

Der erfindungsgemäße DC/DC-Wandler kann auch in umgekehrter Richtung eingesetzt werden. Zu diesem Zweck wird zum Beispiel die Ausführungsform nach Fig. 4 verwendet, welche am dritten Anschluss 24 von einem Solargenerator gespeist wird. An jedem der Anschlüsse 10a, 10b wird ein separater Wechselrichter angeschlossen. Die beiden Wechselrichter können über je einen separaten oder einen gemeinsamen Trafo in das Stromnetz einspeisen. Durch die transformatorische Kopplung können die Potenzialunterschiede zwischen den ersten und zweiten Anschlüssen 10a, 10b überbrückt werden. Es ist möglich, dass die Wechselrichter in verschiedene Phasen einspeisen. Diese Lösung eignet sich beispielsweise, wenn die Netzeinspeisung ins Mittelspannungsnetz erfolgen soll, wozu ohnehin ein Mittelspannungstrafo benötigt wird.

Statt separater Wechselrichter können an die ersten und zweiten Anschlüsse 10a, 10b auch separate potenzialtrennende DC/DC-Wandler oder ein gemeinsamer DC/DC-Wandler mit zwei potenzialgetrennten Eingängen angeschlossen werden, welche über einen Zwischenkreis einen Wechselrichter speisen. Diese Lösung eignet sich, wenn ohnehin eine Potenzialtrennung innerhalb der Wechselrichteranordnung gewünscht ist.

Schließlich ist es auch denkbar, an jeden der Anschlüsse 10a, 10b einen potenzialtrennenden DC/AC-Wandler anzuschließen, wobei jeder dieser Wandler nur eine Halbwelle des Netzstroms erzeugt. Im Verbund beider DC/AC-Wandler entsteht dann eine komplette Sinuswelle.

### BEZUGSZIFFERNLISTE:

- 10: erster Anschluss
- 10a, 10b: erste Anschlüsse
- 12: Drossel
- 13a -13d: Schaltvorrichtungen
- 14a - 14f: Schaltelemente
- 16a - 16d: Gleichrichtelemente
- 20, 22: Puffer-Kondensatoren
- 20a, 20b: Puffer-Kondensatoren
- 24: zweiter Anschluss
- 30a, 30b: Solargenerator
- 32: Wechselrichter

## Patentansprüche

1. Gleichspannungswandler zum Hoch- und/oder Tiefsetzen von Spannungen, mit wenigstens einem ersten Anschluss (10a) und wenigstens einem zweiten Anschluss (10b) sowie wenigstens einem dritten Anschluss (24), wobei ein Energiefluss zwischen den ersten und zweiten Anschlüssen (10a, 10b) einerseits und dem dritten Anschluss (24) andererseits möglich ist;
einer getaktet betreibbaren ersten Halbbrücke, welche parallel zu dem ersten Anschluss (10a) geschaltet ist und eine Reihenschaltung von wenigstens einer ersten Schaltvorrichtung (13a) und einer zweiten Schaltvorrichtung (13c) aufweist; und einer getaktet betreibbaren zweiten Halbbrücke, welche parallel zu dem zweiten Anschluss (10b) geschaltet ist und eine Reihenschaltung von wenigstens einer dritten Schaltvorrichtung (13b) und wenigstens einer vierten Schaltvorrichtung (13d) aufweist,
**dadurch gekennzeichnet, dass**
die Mittelpunkte der beiden getaktet betreibbaren Halbbrücken über wenigstens eine Drossel (12) miteinander verbunden sind, wobei diese wenigstens eine Drossel (12) als fliegende Induktivität betrieben wird.

2. Gleichspannungswandler nach Anspruch 1,
**dadurch gekennzeichnet, dass**
die erste, die zweite, die dritte und/oder die vierte Schaltvorrichtung (13a - 13d) wenigstens ein Schaltelement (14a - 14d) und/oder wenigstens ein Gleichrichtelement (16a - 16d) enthält.

3. Gleichspannungswandler nach Anspruch 1 oder 2,
**dadurch gekennzeichnet, dass**
die erste, die zweite, die dritte und/oder die vierte Schaltvorrichtung (13a - 13d) wenigstens ein Halbleiterelement aufweist, welches getaktet betreibbar ist.

4. Gleichspannungswandler nach einem der vorhergehenden Ansprüche,
**dadurch gekennzeichnet, dass**
eine Einrichtung zum stromlosen und/oder spannungslosen Schalten der ersten, der zweiten, der dritten und/oder der vierten Schaltvorrichtung (13a - 13d) vorgesehen ist.

5. Gleichspannungswandler nach einem der vorhergehenden Ansprüche,
**dadurch gekennzeichnet, dass**
eine Einrichtung zum Takten der ersten, der zweiten, der dritten und/oder der vierten Schaltvorrichtung (13a - 13d) derart, dass Schaltzustände gewählt werden, bei welchen die Spannung an der Drossel (12) klein ist, vorgesehen ist.

6. Gleichspannungswandler nach einem der vorhergehenden Ansprüche,
**dadurch gekennzeichnet, dass**
eine Einrichtung zum Absenken einer Taktfrequenz der ersten, der zweiten, der dritten und/oder der vierten Schaltvorrichtung (13a - 13d) in Abhängigkeit von einem Spannungsübersetzungsverhältnis des Gleichspannungswandlers vorgesehen ist.

7. Gleichspannungswandler nach einem der vorhergehenden Ansprüche,
**dadurch gekennzeichnet, dass**
ein Pol des ersten Anschlusses (10a) mit einem Pol des dritten Anschlusses (24) verbunden ist und ein Pol des zweiten Anschlusses (10b) mit einem anderen Pol des dritten Anschlusses (24) verbunden ist.

8. Gleichspannungswandler nach einem der vorhergehenden Ansprüche,
**dadurch gekennzeichnet, dass**
parallel zum ersten, zweiten und/oder dritten Anschluss (10a, 10b, 24) jeweils wenigstens ein Pufferkondensator (20a, 20b, 22) geschaltet ist.

9. Gleichspannungswandler nach einem der vorhergehenden Ansprüche,
**dadurch gekennzeichnet, dass**
der Energiefluss zwischen den ersten und zweiten Anschlüssen (10a, 10b) und dem dritten Anschluss (24) auf eine Richtung eingeschränkt ist.

10. Gleichspannungswandler nach einem der vorhergehenden Ansprüche,
**dadurch gekennzeichnet, dass**
eine Einrichtung vorgesehen ist, um die ersten und zweiten Anschlüsse (10a, 10b) statisch in Serie oder statisch parallel zu schalten.

11. Schaltungsanordnung mit zwei oder mehr parallel oder in Serie geschalteten Gleichspannungswandlern nach einem der Ansprüche 1 bis 10.

12. Schaltungsanordnung nach Anspruch 11,
**dadurch gekennzeichnet, dass**
die zwei oder mehr parallel geschalteten Gleichspannungswandler im Multiphasebetrieb betreibbar sind.

13. Wechselrichterschaltung, insbesondere Solarwechselrichterschaltung, mit wenigstens einem Gleichspannungswandler nach einem der Ansprüche 1 bis 10 und/oder einer Schaltungsanordnung nach Anspruch 11 oder 12; und wenigstens einem Wechselrichter (32).

## Claims

1. A direct voltage converter for stepping up and/or stepping down voltages, having
at least a first terminal (10a) and at least a second terminal (10b) and also at least a third terminal (24), with a flow of energy between the first and second terminals (10a, 10b) on one hand and the third terminal (24) on the other hand being possible;
a first half-bridge which can be operated in clocked manner, which is connected in parallel to the first terminal (10a) and a series connection of at least a first switching device (13a) and a second switching device (13c); and
a second half-bridge which can be operated in clocked manner which is connected in parallel to the second terminal (10b) and has a series connection of at least a third switching device (13b) and at least a fourth switching device (13d),
**characterised in that**
the midpoints of the two half-bridges which can be operated in clocked manner are connected together via at least one choke (12), this at least one choke (12) being operated as a flying inductor.

2. A direct voltage converter according to Claim 1,
**characterised in that**
the first, the second, the third and/or the fourth switching device (13a - 13d) contains at least one switching element (14a - 14d) and/or at least one rectifying element (16a - 16d).

3. A direct voltage converter according to Claim 1 or 2,
**characterised in that**
the first, the second, the third and/or the fourth switching device (13a - 13d) has at least one semiconductor element which can be operated in clocked manner.

4. A direct voltage converter according to one of the preceding claims,
**characterised in that**
a means for current-free and/or voltage-free switching of the first, the second, the third and/or the fourth switching device (13a - 13d) is provided.

5. A direct voltage converter according to one of the preceding claims,
**characterised in that**
there is provided a means for clocking the first, the second, the third and/or the fourth switching device (13a - 13d) such that switching states in which the voltage at the choke (12) is low are selected.

6. A direct voltage converter according to one of the preceding claims,
**characterised in that**
a means for lowering a clock frequency of the first, the second, the third and/or the fourth switching device (13a - 13d) dependent on a voltage transformation ratio of the direct voltage converter is provided.

7. A direct voltage converter according to one of the preceding claims,
**characterised in that**
a pole of the first terminal (10a) is connected to a pole of the third terminal (24), and a pole of the second terminal (10b) is connected to another pole of the third terminal (24).

8. A direct voltage converter according to one of the preceding claims,
**characterised in that**
in each case at least one buffer capacitor (20a, 20b, 22) is connected in parallel to the first, second and/or third terminal (10a, 10b, 24).

9. A direct voltage converter according to one of the preceding claims,
**characterised in that**
the flow of energy between the first and second terminals (10a, 10b) and the third terminal (24) is restricted to one direction.

10. A direct voltage converter according to one of the preceding claims,
**characterised in that**
a means is provided in order to connect the first and second terminals (10a, 10b) statically in series or statically in parallel.

11. A circuit arrangement with two or more direct voltage converters according to one of Claims 1 to 10 which are connected in parallel or in series.

12. A circuit arrangement according to Claim 11,
**characterised in that**
the two or more direct voltage converters which are connected in parallel can be operated in multiphase operation.

13. An inverter circuit, in particular solar inverter circuit, having at least one direct voltage converter according to one of Claims 1 to 10 and/or one circuit arrangement according to Claim 11 or 12; and at least one inverter (32).

## Revendications

1. Convertisseur continu-continu pour élever et/ou abaisser des tensions, comprenant au moins une première connexion (10a) et au moins une deuxième connexion (10b) ainsi qu'au moins une troisième connexion (24), dans lequel un flux d'énergie est possible entre les première et deuxième connexions (10a, 10b) d'une part et la troisième connexion (24) d'autre part ;
un premier demi-pont pouvant fonctionner de manière cadencée qui est couplé en parallèle avec la première connexion (10a) et présente un couplage en série d'au moins un premier dispositif de commutation (13a) et d'un deuxième dispositif de commutation (13c) ; et un deuxième demi-pont pouvant fonctionner de manière cadencée qui est couplé en parallèle avec la deuxième connexion (10b) et présente un couplage en série d'au moins un troisième dispositif de commutation (13b) et d'au moins un quatrième dispositif de commutation (13d),
**caractérisé en ce**
**que** les points milieu des deux demi-ponts pouvant fonctionner de manière cadencée sont reliés entre eux par l'intermédiaire d'au moins une self (12), ladite au moins une self(12) fonctionnant comme inductance volante.

2. Convertisseur continu-continu selon la revendication 1,
**caractérisé en ce**
**que** le premier, le deuxième, le troisième et/ou le quatrième dispositif de commutation (13a - 13d) contient au moins un élément de commutation (14a - 14d) et/ou au moins un élément de redressement (16a - 16d).

3. Convertisseur continu-continu selon la revendication 1 ou 2,
**caractérisé en ce**
**que** le premier, le deuxième, le troisième et/ou le quatrième dispositif de commutation (13a - 13d) présentent au moins un élément semi-conducteur qui peut fonctionner de manière cadencée.

4. Convertisseur continu-continu selon l'une des revendications précédentes,
**caractérisé en ce**
**qu'**un moyen est prévu pour commuter le premier, le deuxième, le troisième et/ou le quatrième dispositif de commutation (13a - 13d) sans courant et/ou sans tension.

5. Convertisseur continu-continu selon l'une des revendications précédentes,
**caractérisé en ce**
**qu'**un moyen est prévu pour cadencer le premier, le deuxième, le troisième et/ou le quatrième dispositif de commutation (13a - 13d) de façon à choisir des états de commutation dans lesquels la tension à la self(12) est basse.

6. Convertisseur continu-continu selon l'une des revendications précédentes,
**caractérisé en ce**
**qu'**un moyen est prévu pour abaisser une fréquence de cadencement du premier, du deuxième, du troisième et/ou du quatrième dispositif de commutation (13a - 13d) en fonction d'un rapport de transformation de tension du convertisseur continu-continu.

7. Convertisseur continu-continu selon l'une des revendications précédentes,
**caractérisé en ce**
**qu'**un pôle de la première connexion (10a) est relié à un pôle de la troisième connexion (24) et un pôle de la deuxième connexion (10b) est relié à un autre pôle de la troisième connexion (24).

8. Convertisseur continu-continu selon l'une des revendications précédentes,
**caractérisé en ce**
**qu'**au moins un condensateur tampon (20a, 20b, 22) est couplé en parallèle avec la première, la deuxième et/ou la troisième connexion (10a, 10b, 24).

9. Convertisseur continu-continu selon l'une des revendications précédentes,
**caractérisé en ce**
**que** le flux d'énergie entre les première et deuxième connexions (10a, 10b) et la troisième connexion (24) est limité à une seule direction.

10. Convertisseur continu-continu selon l'une des revendications précédentes,
**caractérisé en ce**
**qu'**un moyen est prévu pour coupler statiquement en série ou statiquement en parallèle les première et deuxième connexions (10a, 10b).

11. Circuit comportant deux ou plusieurs convertisseurs continu-continu selon l'une des revendications 1 à 10 couplés en parallèle ou en série.

12. Circuit selon la revendication 11,
**caractérisé en ce**
**que** les deux ou plusieurs convertisseurs continu-continu couplés en parallèle peuvent fonctionner en mode multiphase.

13. Circuit d'onduleur, en particulier circuit d'onduleur solaire, comprenant au moins un convertisseur continu-continu selon l'une des revendications 1 à 10 et/ou un circuit selon la revendication 11 ou 12 ; et au moins un onduleur (32).
